# EUROPÄISCHE PATENTSCHRIFT

(11) **EP 1 850 979 B1**
(45) Veröffentlichungstag und Bekanntmachung des Hinweises auf die Patenterteilung: **22.07.2009**
(21) Anmeldenummer: 06722483.2
(22) Anmeldetag: 13.02.2006
(51) Int. Cl.: B21B 37/78, G01B 21/08

(54) **VERFAHREN UND VORRICHTUNG ZUR ÜBERWACHUNG DES FERTIGUNGSPROZESSES ZUR HERSTELLUNG VON WARMGEFERTIGTEN ROHREN AUS STAHL**
METHOD AND DEVICE FOR MONITORING THE PRODUCTION PROCESS OF HOT-FINISHED STEEL PIPES
PROCEDE ET DISPOSITIF POUR SURVEILLER LE PROCESSUS DE FABRICATION UTILISE POUR PRODUIRE DES TUBES EN ACIER FINIS A CHAUD

(30) Priorität: 23.02.2005 DE 102005009482
(43) Veröffentlichungstag der Anmeldung: 07.11.2007
(73) Patentinhaber: V & M Deutschland GmbH, 40472 Düsseldorf (DE)
(72) Erfinder: KÜMMERLING, Rolf, 47249 Duisburg (DE); SCHMITTE, Till, 44807 Bochum (DE)
(74) Vertreter: Meissner, Peter E.
(86) Internationale Anmeldenummer: PCT/DE2006/000264
(87) Internationale Veröffentlichungsnummer: WO 2006/089514

(56) Entgegenhaltungen:
- WO-A-00/63642
- PATENT ABSTRACTS OF JAPAN Bd. 005, Nr. 147 (M-088), 17. September 1981 (1981-09-17) & JP 56 077018 A (SUMITOMO METAL IND LTD), 25. Juni 1981 (1981-06-25) in der Anmeldung erwähnt
- PATENT ABSTRACTS OF JAPAN Bd. 007, Nr. 071 (M-202), 24. März 1983 (1983-03-24) & JP 58 000313 A (KAWASAKI SEITETSU KK; others: 01), 5. Januar 1983 (1983-01-05)

## Beschreibung

Die Erfindung betrifft ein Verfahren zur Überwachung des Fertigungsprozesses zur Herstellung von warmgefertigten Rohren, insbesondere Hohlblockrohren aus Stahl, gemäß dem Oberbegriff des Patentanspruches 1. Weiterhin betrifft die Erfindung eine Vorrichtung zur Durchführung dieses Verfahrens gemäß dem Oberbegriff des nebengeordneten Patentanspruchs 9.
Ein solches Verfahren und eine solche Vorrichtung sind aus dem JP-Abstract 56077018A bekannt, wobei hier der Fertigungsprozess so abläuft, dass aus einem erhitzten Block mittels eines Schrägwalzwerkes unter Verwendung eines aus Lochdorn und Dornstange bestehenden Innenwerkzeuges ein Hohlblock hergestellt wird. Unmittelbar nach Austritt aus dem Schrägwalzwerk wird die von der Außenoberfläche ausgesandte Wärmestrahlung ortsaufgelöst erfasst und es wird durch Vergleich mit Referenzwerten eine Beurteilung des Prozesszustandes durchgeführt.

Im Rahmen der Überwachung des Fertigungsprozesses bei der Herstellung von warmgefertigten Rohren, insbesondere Hohlblockrohren ist es wichtig, möglichst frühzeitig u. a. derartige Aussagen über den Prozesszustand bzw. die Stabilität des Walzprozesses zu gewinnen, weil die Eigenschaften des Endproduktes, d. h. des Fertigrohres maßgeblich hiervon beeinflusst werden.

Ein entscheidender Qualitätsparameter ist hierbei neben den mechanisch technologischen Materialeigenschaften die Rohrwanddicke, die im Produktionsprozess in verschiedenen Fertigungsstufen am Rohr gemessen und überwacht wird.

Hohlblockrohre aus Stahl werden beispielsweise durch ein Verfahren hergestellt, bei dem zylindrisch geformtes und in einem Drehherdofen erwärmtes Ausgangsmaterial, ein so genannter Block, in einem Schrägwalzwerk unter Einsatz eines axial feststehenden aus Lochdorn und Dornstange bestehenden Innenwerkzeuges zu einem rohrförmigen Hohlblock umgeformt wird.

Zur Umformung des Blockes zu einem nahtlosen Hohlblockrohr wird der Block nach dem Erfassen vom Schrägwalzwerk schraubenlinienförmig durch das Schrägwalzwerk und damit über das feststehende Innenwerkzeug transportiert.

Beim nachfolgenden Streck-, sowie Streckreduzier- oder Maßwalzen durchläuft das Hohlblockrohr ein oder mehrere Walzgerüste, die in Förderrichtung des Rohres hintereinander angeordnet sind. In jedem Walzgerüst sind Walzen gelagert, die beim Walzvorgang das Hohlblockrohr jeweils um einen definierten Umfangsabschnitt kontaktieren. Das Hohlblockrohr wird so zu einem Fertigrohr mit definierten Nennabmessungen gewalzt und dabei auf die geforderte Geometrie gebracht.

Ein solches Verfahren wird beispielsweise im Stahlrohr Handbuch, 12. Auflage, S. 95 ff, Vulkan-Verlag Essen, beschrieben.

Allgemein ist zur zerstörungsfreien Ermittlung der Wanddicke an Rohren das Ultraschall-Messverfahren bekannt.

Bei diesem Verfahren werden in der Wand nach dem Puls-Echoverfahren ausgehend von der einen Seite der Rohrwand Ultraschallimpulse in der Wand angeregt und die von der gegenüberliegenden Rohrwand reflektierten Signale wieder empfangen. Aus der Laufzeit zwischen dem Aussenden des Impulses und der Empfangszeit und aus der Schallgeschwindigkeit im zu prüfenden Material lässt sich die Dicke der Rohrwand berechnen.

Um zu einem im Fertigungsprozess möglichst frühzeitigen Zeitpunkt eine Aussage über die Rohrwanddicke zu erhalten, sind Messverfahren entwickelt worden, die bereits am noch heißen Hohlblockrohr die Wanddicke ermitteln.

Das frühzeitige Erkennen von Wanddickenüber- oder -unterschreitungen ist von Vorteil, da Abweichungen, insbesondere die Exzentrizität, in den nachfolgenden Fertigungsschritten zwar minimiert aber nicht vollständig kompensiert werden können.

Ein Verfahren zur Messung der Wanddicke eines Rohres in einem Rohrwalzwerk wird in der DE 102 44 554 B4 beschrieben. Bei diesem auf Laser-Ultraschall basierenden Verfahren wird mittels eines Anregungslasers ein Ultraschallimpuls punktuell in die Oberfläche des Rohres eingeleitet und das reflektierte Ultraschallsignal an der Oberfläche des Rohres mittels eines Beleuchtungslasers und eines Interferometers erfasst und in einer nachfolgenden Auswerteeinheit ausgewertet. Hierbei ist die Messeinheit stationär angeordnet und das Rohr bewegt sich unter der Messeinheit in Längs- und Umfangsrichtung, wobei die Oberfläche des Rohres schraubenlinienförmig punktuell abgetastet wird.

Dieses Verfahren hat den Nachteil, dass es zeit- und kostenaufwändig im Aufbau, der Handhabung und Wartung ist. Ein weiterer Nachteil besteht darin, dass nur eine punktuelle Erfassung der Rohrwanddicke erfolgt, und eine fundierte Beurteilung der aktuellen Prozessstabilität nur eingeschränkt möglich ist, denn dazu wäre eine nahezu flächendeckende Erfassung der gesamten Rohrwand notwendig.

Prozesseinflüsse, die sich nicht in Wanddickenänderungen widerspiegeln, können mit diesem Verfahren ebenfalls nicht erfasst bzw. erkannt werden.

Aufgabe der Erfindung ist es, ein einfach zu handhabendes und kostengünstiges Verfahren und eine Vorrichtung zur Durchführung des Verfahrens zur Überwachung des Fertigungsprozesses zur Herstellung warmgefertigter Rohre, insbesondere Hohlblockrohre aus Stahl, anzugeben, mit dem fundierte und möglichst zeitnahe Aussagen über den Prozesszustand bzw. die Prozessstabiltät des Walzprozesses getroffen werden können.

Dabei sollte dieses Verfahren dahingehend zu optimieren werden, dass etwaige die Prozessstabilität des Walzprozesses beeinflussende Ereignisse frühzeitig erkannt werden, und so eine gezielte Korrektur des Prozesses möglich wird.

Erfindungsgemäß wird diese Aufgabe verfahrensmäßig mit den Merkmalen des Patentanspruchs 1 und vorrichtungsmäßig mit den Merkmalen des Patentanspruchs 9 gelöst.

Dazu wird eine etwaige an einem bestimmten Messort am Hohlblockrohr signifikant auftretende Abweichung im Vergleich zum Wärmebild des gleichen Messortes am Referenzkörper zu einer Beurteilung des Prozesszustandes verwendet.

Stähle gleicher Stahlgüteklassen sind insbesondere **dadurch gekennzeichnet, dass** sich die thermischen Eigenschaften innerhalb einer Stahlgüteklasse nur in einer für die Auswertung unerheblichen Größenordnung unterscheiden.

Bei den umfangreichen internen Untersuchungen hat sich gezeigt, dass bei der Herstellung von Hohlblockrohren der gleichen Stahlgüteklasse mit gleichen Nennabmessungen eine direkte Korrelation zwischen dem erfassten Wärmebild und dem aktuellen Prozesszustand vorhanden ist.

Ein instabiler werdender Fertigungsprozess zeigt sich in einem qualitativ deutlich veränderten Wärmebild. Durch die orts- und zeitaufgelöste Erfassung des Wärmebildes lässt sich so der Fertigungsprozess exakt analysieren und überwachen.

Der große Vorteil dieses Verfahrens liegt darin, dass es nunmehr möglich ist, mit einem sehr geringen messtechnischen Aufwand allein durch die qualitative_Beurteilung des Wärmebildes des vollständig erfassten Bereiches der Rohroberfläche, eine fundierte Aussage über den aktuellen Prozesszustand zu treffen.

Auf einfache Weise kann durch Vergleich der erfassten Wärmebilder, den sogenannten Fingerprints, mit den Referenzbildern, der als "gut" bewerteten Hohlblockrohre, eine Beurteilung des aktuellen Prozesszustandes erfolgen.

Im Gegensatz zum bekannten Verfahren wird zur thermischen Aufnahme der von der Oberfläche des Hohlblockrohres ausgesandten Wärmestrahlung nur eine standardmäßige und damit kostengünstig verfügbare, einfach zu handhabende und wartungsarme Wärmebildkamera mit daran angeschlossener Auswerteeinheit benötigt.

Bei diesem Verfahren wird beispielsweise in einer Abfolge von 60 Hz ein Wärmebild des sich schraubenlinienförmig bewegenden Hohlblockrohres aufgenommen, wobei die Wärmestrahlung über Länge und Umfang des Hohlblockrohres vollständig erfasst wird.

Um eine automatisierte Auswertung zu ermöglichen, wird das erfasste Wärmebild vorteilhaft als aufgelöstes Feld von einzelnen Pixeln dargestellt.

Über eine nach Ort und Zeit aufgelöste Darstellung der einzelnen Wärmebilder bzw. Pixel lässt sich nun im Vergleich mit der entsprechenden Darstellung vom Referenzrohr die fundierte Beurteilung des aktuellen Prozesszustandes vornehmen.

In einer verbesserten Ausführungsform wird die Wärmestrahlung nur in einem schmalen Messfenster entlang einer schraubenlinienförmig verlaufenden Mantellinie des Hohlblockrohres erfasst, wobei das Wärmebild der Rohroberfläche aber weiterhin vollständig erfasst wird.

Die zur Verarbeitung herangezogenen Bildbereiche stellen dann auch eine senkrecht zur Kamera orientierte Ebene dar, so dass keine Probleme mit Verzerrungen, Tiefenschärfe etc. auftreten.

Ein weiterer Vorteil ist, dass durch die differenzierte Erfassung die Auflösung des Wärmebildes nach Ort und Zeit verbessert und die exaktere Zuordnung des aktuellen Prozesszustandes zum vergleichbaren Messort des Referenzrohres vorgenommen werden kann.

Vorteilhaft kann mit diesem Verfahren auch ein instabiler werdende Fertigungsprozess durch etwaige auftretende Wanddickenabweichungen am Hohlblockrohr analysiert und daraus die Stabilität des Fertigungsprozesses beurteilt werden.

Bei den internen Versuchen zur Erfassung der Wärmestrahlung eines Hohlblockrohres wurden überraschenderweise auch Korrelationen zwischen der Intensität der Wärmestrahlung und der am Hohlblockrohr ermittelten Wanddicke für den jeweiligen Messort festgestellt.

Beispielsweise führt eine inhomogene Durchwärmung des Ausgangsmaterials im Drehherdofen zu einer ungleichförmigen Verteilung der Wanddicke, die sich mit diesem Verfahren ebenfalls messtechnisch erfassen und beurteilen lässt.

Hierfür werden vom Wärmebild unter Berücksichtigung der tatsächlichen Emissionsverhältnisse Temperaturen abgeleitet und mit den aus dem Referenzbild eines bereits gefertigten Hohlblockrohres gleicher Stahlgüteklasse, gleicher Nennabmessung und mit über Umfang und Länge bekannter Wanddickenverteilung ermittelten Temperaturen des jeweils gleichen Messortes verglichen.

Eine etwaige an einem bestimmten Messort am Hohlblockrohr auftretende Abweichung der ermittelten Temperatur im Vergleich zur Referenztemperatur des gleichen Messortes am Referenzkörper wird einer entsprechenden Abweichung in der Wanddicke für den Messort zugeordnet und zu einer Beurteilung der Prozessstabilität verwendet.

Ein weiterer großer Vorteil dieses Verfahrens ist, dass die Erfassung der Wärmestrahlung und die Zuordenbarkeit der Wärmestrahlung des Hohlblockrohres zur Wanddicke an einem bestimmten Messort mit sehr geringem messtechnischen Aufwand erfolgt und Veränderungen der Prozessstabilität frühzeitig erkannt werden.

Um einen ortsunabhängigen Vergleich der aktuellen Temperaturverteilung mit der Temperaturverteilung des Referenzkörpers zu ermöglichen, wird eine Auswertung der Temperaturverteilung vorteilhaft im Frequenzraum durchgeführt. Dabei werden die aktuellen Temperaturdaten auf einer geeigneten Datenverarbeitungseinheit mittels der schnellen Fourier-Transformation (FFT) in Frequenzinformationen, d. h. Amplituden und Phasen, umgewandelt und mit den entsprechenden Frequenzinformationen der Temperaturdaten des Vergleichsrohres verglichen. Dadurch können Vergleiche auch unabhängig vom exakten tatsächlichen Messort am Rohr durchgeführt werden.

Vorteilhaft bietet dieses Verfahren in einer weiteren Ausgestaltung die Möglichkeit, aus einer Vielzahl zuvor an Referenzkörpern gleicher Stahlgüte und Durchmesser ermittelter Wanddickenverteilungen einen Toleranzbereich für Wanddickenabweichungen festzulegen, bei dessen Überschreitung durch die ermittelten Ist-Wanddickenabweichungen des in der Fertigung befindlichen Hohlblockes ein Signal ausgelöst wird.

Durch die erfindungsgemäße Erfassung von Wanddickenabweichungen, die mit den an Referenzkörpern erfassten Wanddickenabweichungen zeitnah im Prozessverlauf verglichen werden, ist es jetzt möglich, die Prozessstabilität bzw. Veränderungen in der Prozessstabilität zu beurteilen und bei Überschreiten von festgelegten Grenzen entsprechende Maßnahmen einzuleiten.

Etwaige, die Prozessstabilität beeinflussende Ereignisse, wie z. B. Werkzeugverschleiß, unkorrekte Führung des Hohlblockrohres, krumme Walzstange etc., für die zuvor Wanddickenabweichungen an entsprechenden Referenzrohren ermittelt wurden, können nun mit den Messwerten des aktuellen Walzprozesses verglichen und bei Überschreiten einer Toleranzgrenze der Bezug zum jeweiligen Ereignis hergestellt werden.

Das Verfahren kann vorteilhaft dahingehend weiter optimiert werden, dass die jeweils für das gefertigte Hohlblockrohr ermittelte Zuordnung von Messsignal und Ereignis in einer Datenbank der Auswerteeinheit für jeden Referenzkörper der gleichen Stahlgüteklasse, Durchmesser und Wanddicke hinterlegt und bei Überschreiten der Toleranzgrenzen für die Wanddickenabweichung an einem bestimmten Messort, das zur Toleranzgrenzenüberschreitung führende Ereignis angezeigt wird.

Durch diesen Selbstlerneffekt wird quasi ein Expertensystem aufgebaut, welches mit der kontinuierlichen Hinterlegung der Zuordnung von angezeigtem Signal und stattgefundenem Ereignis für das jeweilige Hohlblockrohr zunehmend sicherere und zeitnahe Aussagen über die Prozessstabilität und über die, die Prozessstabilität beeinflussenden, Faktoren ermöglicht.

Darüber hinaus bietet es sich an, aus diesen Erkenntnissen Korrekturmaßnahmen für den Fertigungsprozess abzuleiten, um letztendlich möglichst konstante Produkteigenschaften bei möglichst störungsarmen Fertigungsablauf zu erzielen.

Mit diesem Verfahren ist es möglich, den Walzprozess zu überwachen, zu korrigieren und eine Aussage über die Wanddicke bzw. Wanddickenverteilung des fertigen Rohres zu treffen.

Notwendig für die Anwendung dieses Verfahrens ist allerdings, dass die thermografische Erfassung der Wärmestrahlung des Hohlblockrohres zeitnah nach Austritt aus dem Schrägwalzwerk erfolgt, um etwaige prozessbedingte Veränderungen in der Intensität der Wärmestrahlung nach dem Umformprozess möglichst auszuschließen. Bei zeitlich zu stark versetzter Erfassung der Wärmestrahlung kann bereits eine Homogenisierung der Wärmeverteilung stattgefunden haben, so dass prozessbedingte Einflüsse nicht mehr sicher erkannt werden können.

In einer vorteilhaften Ausgestaltung des Verfahrens ist es ebenfalls möglich, auch die IstWerte der Wanddicke am Hohlblockrohr zu ermitteln. Hierbei wird unmittelbar nach Austritt aus dem Schrägwalzwerk die von der Außenoberfläche des Hohlblockrohres ausgesandte Wärmestrahlung mindestens eines eine volle Umdrehung umfassenden Außenoberflächenbereiches des Hohlblockrohres orts- und zeitaufgelöst an einem jeweils gleichen sich schraubenlinienförmig fortbewegenden Messort in zeitlichen Abständen mindestens zweifach thermografisch erfasst.

Von dem jeweils erfassten Wärmebild wird eine dem jeweiligen Messzeitpunkt zugeordnete Temperatur abgeleitet und diese durch Anwendung bekannter physikalischer Beziehungen in eine Ist-Wanddickenverteilung über Umfang und Länge des Hohlblockrohres umgewandelt und mit der Wanddicke am gleichen Messort des entsprechenden Referenzkörpers oder einer entsprechenden globalen Soll-Vorgabe verglichen.

Weitere Merkmale, Vorteile und Einzelheiten der Erfindung ergeben sich aus der nachfolgenden Beschreibung der dargestellten Ausführungsbeispiele.

Es zeigen:
- **Figur 1a**: punktuelle Abtastung der Rohroberfläche nach dem Stand der Technik,
- **Figur 1b**: erfindungsgemäße flächendeckende Abtastung der Rohroberfläche,
- **Figur 1c**: wie Figur 1b, jedoch mit mehrfacher zeitlich versetzter Erfassung desselben sich schraubenlinienförmig fortbewegenden Messortes,
- **Figur 2**: schematisch dargestellte Messanordnung zum erfindungsgemäßen Verfahren,
- **Figur 3**: graphische Darstellung der Auswertungsmöglichkeiten.

Grundsätzlich ist bei dem erfindungsgemäßen Verfahren wie auch bei dem bekannten Verfahren in allen Fällen der aus Mess- bzw. Erfassungseinheit bestehende Sensor fest angeordnet und das Rohr bewegt sich in Längs- und Umfangsrichtung darunter hinweg. Dadurch wird die Oberfläche des Rohres schraubenlinienförmig abgetastet. Das Verhältnis von Längs- und Umfangsgeschwindigkeit wird durch den sogenannten Transportwinkel festgelegt. Dabei soll die Steigung der Abtastspur *dₐ* die Strecke bezeichnen, die das Rohr in Längsrichtung durchläuft, wenn es sich einmal um 360° dreht.

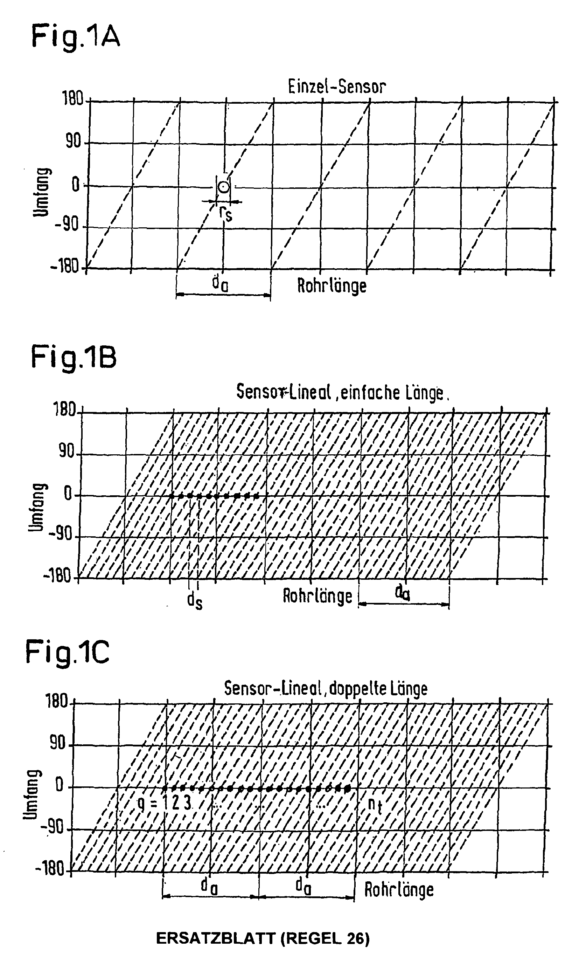

Ein einzelner punktförmiger Messfleck, eines nach dem Stand der Technik bekannten Sensors, beschreibt auf der Rohroberfläche eine einzelne schraubenlinienförmige Abtastspur. In einer Abwicklungsdarstellung gemäß **Figur 1a****,** bei der die Oberfläche des Rohres in die Blattebene projiziert worden ist, wird diese Spur durch diagonale Linien auf der Oberfläche dargestellt, wobei die Längskoordinate offensichtlich bei den Umfangskoordinaten -180° und +180° identisch ist. In diesem Fall legt der Transportwinkel auch die Neigung der Linie der Abtastspur fest.

In dieser Messgeometrie kann eine 100% Erfassung der Rohroberfläche nicht erreicht werden. Bei einem real vorhandenen Messfleck mit einer Ausdehnung *rₛ* dürfte der Vortrieb pro Umdrehung nicht größer als *rₛ* werden.

Für reale Situationen im Walzwerksbetrieb ist dies allerdings nicht darstellbar. Vielmehr wird in diesem Fall die Oberfläche des Rohres mit einer Abtastung von weniger als 100% erfasst, wie dies beim bekannten Verfahren der Fall ist. Dagegen kann die Abtastung auf der schraubenlinienförmigen Abtastspur sehr dicht sein. Dieser Parameter wird nur von der Auslesefrequenz *fₛ* bestimmt.

Nach **Figur 1b** wird bei der erfindungsgemäßen thermografischen Erfassung der Wärmestrahlung der Rohroberfläche das Wärmebild durch eine in einzelne Pixel aufgelöste Fläche dargestellt.

Betrachtet man nun nur die mittlere Pixelzeile im Gesamtbild, welche auch in Rohrlängsrichtung orientiert ist und den Oberflächenbereich abbildet, der der Kamera am nächsten liegt, so erhält man ein sog. Sensorlineal mit einer Vielzahl an Sensoren.

Dieses Sensorlineal ist in Richtung der Rohrlängsachse orientiert, es kann aber auch je nach Erfordernissen senkrecht dazu, also in Rohrumfangsrichtung, oder auch in einem beliebigen Winkel zur Rohrlängsachse orientiert sein. Die Länge des Sensorlineals entspricht idealerweise genau der Steigung der Abtastspur.

Bei einer Anzahl von *n* Sensoren in einem Lineal erhöht sich die Abtastung um den Faktor *n*. Entspricht der Abstand der Sensoren *dₛ* der sensitiven Fläche (*rₛ* = *dₛ*) und die Abtastfrequenz ist ausreichend groß, kann eine 100%ige Abtastung erreicht werden, wobei jeder Punkt der Rohroberfläche genau einmal gemessen wird.

Wird die Länge des Sensorlineals länger gewählt, z. B. in zwei-, drei- oder mehrfacher Länge der Steigung der Abtastspur, wird jeder Punkt der Rohroberfläche ebenfalls zwei-, drei- oder mehrfach gemessen.

Bei dem in **Figur 1c** dargestellten Beispiel wird jeder Punkt genau zweimal gemessen (2x*dₐ*). Sei n die Anzahl der Sensoren im Lineal pro Steigung und die gesamte Lineallänge sei *N*dₐ*, die Anzahl der Sensoren also *N*n*. Jeder Punkt auf der Rohroberfläche durchläuft dann *N*fach das Sensorlineal. Zum Beispiel das erste Mal bei Sensor Nr. 1, das zweite Mal bei Sensor Nr. *N*+1, das dritte Mal bei Sensor Nr. 2*N*+1 etc. Voraussetzung dafür ist allerdings das die Auslesefrequenz *fₛ* ausreichend hoch ist.

Erst durch diese Anordnung ist es möglich einen Parameter, z. B. die Wanddicke oder die Temperatur, nicht nur als Funktion des Ortes auf der Rohroberfläche sondern auch als Funktion der Zeit zu messen. Dabei kann die Zeit nur in diskreten Abständen variiert werden, die durch die Zeit, die das Rohr für eine Umdrehung benötigt, festgelegt werden.

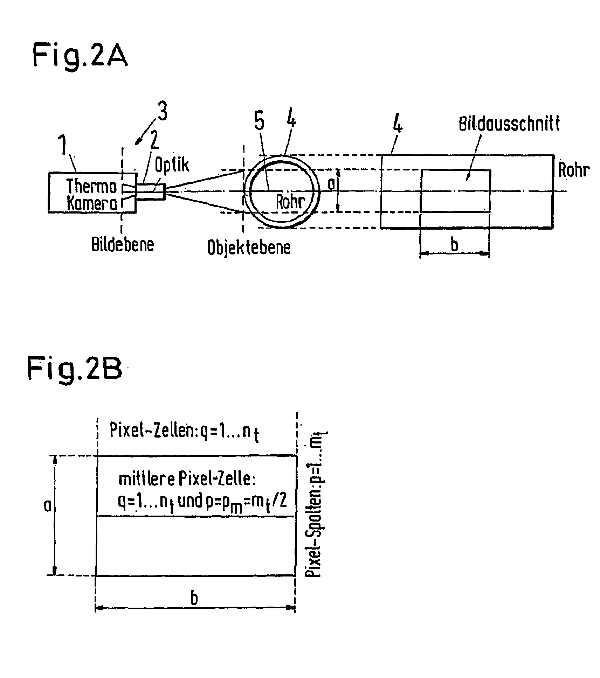

In **Figur 2** ist eine erfindungsgemäße Messanordnung schematisch dargestellt. Zur Messung der Temperatur der Rohroberfläche wird eine aus einer Thermokamera 1 mit einer daran angeschlossenen Optik 2 bestehende Wärmebildkamera 3 verwendet. Diese misst die Wärmestrahlung der Oberfläche innerhalb einer kurzen Zeit *dₜ* mit einer Bildwiederholungsrate *fₜ*, d. h. die Bilder entstehen zu Zeitpunkten *t*=*i*dt*, *i*=*0,1,2,3*.....

Die integrierte Optik 2 ermöglicht die Aufnahme von Bildern mit einer Anzahl von *nₜ*mₜ* Pixeln einer tatsächlichen Fläche auf der Oberfläche des Hohlblockrohres 4 von *a***b* (in mm). Die Kamera 3 ist vorteilhaft so orientiert, dass deren optische Achse 5 senkrecht durch die Rohrlängsachse verläuft. Die Kamera 3 liefert: *T*=*T(p,q,t), p*=*1..nₜ, q*=*1..mₜ.*

Nötig ist eine Konvertierung der Pixel-Koordinaten *p*,*q* in eine Ortsraumdarstellung. Zweckmäßigerweise wählt man für eine Rohroberfläche Zylinderkoordinaten *x*,*f* . Sei *b* die Länge des Bildausschnitts in Rohrlängsrichtung. Betrachtet man nun nur die mittlere Pixelzeile *p*=*pₘ* im Gesamtbild, welche auch in Rohrlängsrichtung orientiert ist und den Oberflächenbereich abbildet, der der Kamera am nächsten liegt, so erhält man ein Sensorlineal mit insgesamt *mₜ* Sensoren, d. h. *T*=*T(q,i)*. Ist der Bildbereich so gewählt, dass die abgebildete Länge *b N*-fach größer ist als die Steigung der Abtastspur kann man den in **Figur 1c** dargestellten Fall einstellen.

Die zur Verarbeitung herangezogenen Bildbereiche stellen dann auch eine senkrecht zur Kamera 3 orientierte Ebene dar, so dass keine Probleme mit Verzerrungen, Tiefenschärfe etc. auftreten. Somit ist eine Konvertierung in den Ortsraum durch geeignete Umsortierung der Daten möglich, und man erhält *T*=*T(x,f,i)*.

Vorraussetzung dafür ist jedoch, dass *fₜ* ausreichend groß, bzw. *dₜ* ausreichend klein gewählt wird.

Da die Temperatur an einer bestimmten Stelle des Rohres mehrfach gemessen wird kann auch eine Veränderung der Temperatur *DT*=*DT(x,f)* angegeben werden, indem man z. B. aus den gemessenen Temperaturen an einem Ort der Rohroberfläche mittels Regressionsanalyse eine Steigung bestimmt. Diese Informationen können zur quantitativen Analyse herangezogen werden.

Zusammengefasst ist es also möglich in der oben beschriebenen Messanordnung und durch geeignetes Umsortieren der Rohdaten jedem Punkt der Rohroberfläche eine Temperatur zuzuordnen, welche der Temperatur zum Zeitpunkt der Passage des Messortes entspricht. Zusätzlich kann auch die Temperaturänderung angegeben werden.

Voraussetzung für die obige Umsortierung der Daten ist, dass der abgebildete Ort auf der Rohroberfläche im Verlauf der Messung bekannt ist. Die Messung des Geschwindigkeitsvektors der Oberfläche kann vorteilhaft durch eine Korrelationsrechnung der aufeinander folgenden Thermografiebilder durchgeführt werden, oder es können externe Messinstrumente zur unabhängigen Bestimmung von Umfangs und Längsgeschwindigkeit eingesetzt werden.

Aus diesen Messungen ergibt sich bei bekanntem Startpunkt jeweils der Ort des Bildmittelpunkts als Funktion der Zeit. Bei bekannten Abbildungsbedingungen kann so der Ort *(x,f)* jedes Pixels *(p,q)* für einen Zeitpunkt bestimmt werden.

Da der Produktionsprozess gewisse zyklische Umformungen, Erwärmungen und allgemeine Bewegungen enthält, ist die Temperaturverteilung auf dem Rohr auch zyklischen Schwankungen unterworfen.

Nach der Umsortierung der Daten ist es daher vorteilhaft die Temperatur oder die Temperaturänderung als Funktion der Ortskoordinaten durch Fouriertransformation in einen Frequenzraum zu überführen. Die Fouriertransformation geschieht z. B. mittels der sogenannten schnellen Fouriertransformation (FFT) in Rohrlängsrichtung, in Rohrumfangsrichtung oder in beiden Richtungen.

Aus den Ergebnissen können die Amplituden und Phasenlagen von typischen Temperaturschwankungen oder Temperaturänderungsschwankungen abgeleitet werden.

Die nicht auf der oben beschriebenen Linie liegenden Pixel, können natürlich benutzt werden, um eine Abbildung der Wärmestrahlung der Rohroberfläche zu erhalten.

Bei der Auswertung eines solchen Bildes ist jedoch auf Abbildungsfehler durch die gekrümmte Rohroberfläche zu achten. Diese Information kann aber auch ohne Umsortierung zur qualitativen Prozessanalyse (Fingerprint) in Form eines Expertensystems herangezogen werden.

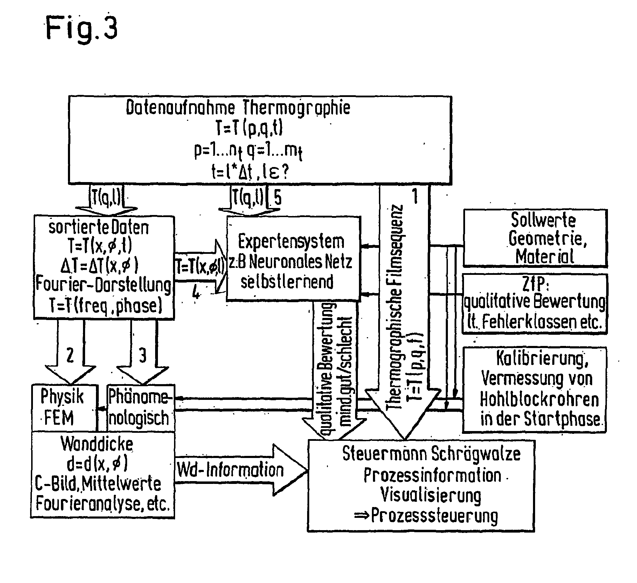

Die verschiedenen Auswertungsmöglichkeiten sind in **Figur 3** dargestellt. Beispielhaft werden hier 5 Möglichkeiten diskutiert:
1) Die thermograpfische Messung wird als live-Bild direkt dem Steuermann der Schrägwalze zugänglich gemacht. Aufgrund von Erfahrung und/oder katalogisierter Referenzbilder und Filmsequenzen wird die Steuerung des Walzaggregats beeinflusst.
   Diese einfachste Möglichkeit der Auswertung bietet allerdings nicht die Möglichkeit der weiteren Automatisierung oder quantitativer Prozessanalyse und -steuerung. Für eine weitergehende automatisierte Prozessführung sind vorteilhaft die nachfolgend beschriebenen Methoden 2) - 5) geeignet.
2) Die Berechnung der tatsächlichen Wanddicke *d(x,f)* oder der Wanddickenänderung *Dd (x,f)* mittels physikalischer Gesetzmäßigkeiten und/oder numerischer Berechnungen (Finite Elemente). Zur Kalibrierung der Numerik sind einige Referenzmessungen an Hohlblockrohren nötig.
3) Die Berechnung der tatsächlichen Wanddicke *d(x,f)* oder der Wanddickenänderung *Dd (x,f)* mittels reiner phänomenologischer Vergleiche von Temperaturmessungen und Wanddickenmessungen an Referenzrohren.
   Die Methoden 2) und 3) können statt im Ortsraum auch im Fourierraum durchgeführt werden. Hierbei werden statt der tatsächliche Wanddicke als Funktion der Ortskoordinaten nur Amplituden typischer Wanddickenschwankungen ermittelt. Diese sind jedoch oft von ausreichender Aussagekraft bezüglich des Zustandes des Produktionsprozesses.
   Die Ergebnisse der Methoden 2) und 3) liefern Wanddickendaten die dem Steuermann der Schrägwalze direkt zugeführt werden können.
4) Die Rohdaten werden umsortiert wie oben. Die Daten werden dann einem selbstlernenden Expertensystem zugeführt, welches zusätzlich mit Qualitätsdaten der Rohrprüfung am Ende des Produktionsprozesses versorgt wird.
   Das Expertensystem kann nach einer Einlernphase vorteilhaft qualitative Bewertungen des gerade gefertigten Hohlblocks liefern.
   Da es ständig mit Informationen versorgt wird, wird die Vorraussagefähigkeit des Systems mit der Zeit immer genauer. Besonders vorteilhaft ist in diesem Fall auch die Speisung des Expertensystem mit den aus der Fouriertransformation erhaltenen Daten.
5) Statt die umsortierten Rohrdaten dem Expertensystem zuzuführen können auch die Thermografiebilder direkt benutzt werden.
   Mit den Methoden 4) und 5) werden vorteilhaft qualitative Aussagen zum Produktionszustand zur Verfügung gestellt, die dem Steuermann der Schrägwalze direkt zugeführt werden.

**Bezugszeichenliste**

| **Nr.** | **Bezeichnung** |
|---|---|
| 1 | Thermokamera |
| 2 | Optik |
| 3 | Wärmebildkamera |
| 4 | Hohlblockrohr |
| 5 | optische Achse |
| a | Breite Bildausschnitt |
| b | Länge Bildausschnitt |
| dₐ | Steigung Abtastspur |
| dₛ | Sensorabstand |
| fₛ | Auslesefrequenz |
| fₜ | Bildwiederholrate |
| i | i=0,1,2,3.... |
| rₛ | sensitive Fläche Messfleck |
| t,δt | Zeitpunkte |
| T | Temperatur |
| ΔT | Temperaturveränderung |
| N | Anzahl Steigungen |
| n | Anzahl Sensoren |
| nₜ | Anzahl Pixel auf Pixelzeile |
| mₜ | Anzahl Pixel auf Pixelspalte |
| p,q | Pixelkoordinaten |
| pₘ | mittlere Pixelzeile |
| x,φ | Zylinderkoordinaten |

## Patentansprüche

1. Verfahren zur Überwachung des Fertigungsprozesses zur Herstellung warmgefertigter Rohre, insbesondere Hohlblockrohre (4) aus Stahl, bei dem aus einem erhitzten Block mittels eines Schrägwalzwerkes unter Verwendung eines aus Lochdorn und Dornstange bestehenden Innenwerkzeuges ein Hohlblockrohr (4) hergestellt wird, wobei nach dem Erfassen des Blockes vom Schrägwalzwerk dieser bzw. das Hohlblockrohr (4) schraubenlinienförmig durch das Schrägwalzwerk bzw. über das feststehende Innenwerkzeug transportiert wird, wobei
unmittelbar nach Austritt aus dem Schrägwalzwerk die von der Außenoberfläche des Hohlblockrohres (4) ausgesandte Wärmestrahlung ortsaufgelöst erfasst und im Vergleich mit Referenzwerten zu einer Beurteilung des Prozesszustandes verwendet wird,
**dadurch gekennzeichnet,**
**dass** die Wärmestrahlung mindestens eines definierten Abschnittes der Außenoberfläche des Hohlblockrohres (4) zusätzlich zeitaufgelöst vollständig thermografisch erfasst wird und das erfasste Wärmebild mit dem Referenzbild eines bereits gefertigten Hohlblockrohres gleicher Stahlgüteklasse und gleicher Nennabmessung des jeweils gleichen Messortes verglichen wird, wobei eine etwaige an einem bestimmten Messort am Hohlblockrohr (4) signifikant auftretende Abweichung des Wärmebildes im Vergleich zum Wärmebild des gleichen Messortes am Referenzkörper zu der Beurteilung des Prozesszustandes verwendet wird.

2. Verfahren nach Anspruch 1
**dadurch gekennzeichnet,**
**dass** die Wärmestrahlung entlang einer schraubenlinienförmig verlaufenden Mantellinie des Hohlblockrohres orts- und zeitaufgelöst getaktet thermografisch erfasst und ausgewertet wird.

3. Verfahren nach Anspruch 1 und 2
**dadurch gekennzeichnet,**
**dass** zur Orts- und Zeitauflösung das erfasste Wärmebild in einzeln auswertbaren Pixeln dargestellt wird.

4. Verfahren nach den Ansprüchen 1 - 3
**dadurch gekennzeichnet,**
**dass** aus dem erfassten Wärmebild zusätzlich Wanddickenabweichungen am Hohlblockrohr ermittelt werden, wobei von dem Wärmebild unter Berücksichtigung der tatsächlichen Emissionsverhältnisse Temperaturen abgeleitet werden und mit den aus dem Referenzbild eines bereits gefertigten Hohlblockrohres aus gleicher Stahlgüteklasse, gleicher Nennabmessung und mit über Umfang und Länge bekannter Wanddickenverteilung ermittelten Temperaturen des jeweils gleichen Messortes verglichen werden, wobei eine etwaige an einem bestimmten Messort am Hohlblockrohr auftretende Abweichung der ermittelten Temperatur im Vergleich zur Referenztemperatur des gleichen Messortes am Referenzkörper einer entsprechenden Änderung in der Wanddicke für den Messort zugeordnet und zu einer Beurteilung der Prozessstabilität verwendet wird.

5. Verfahren nach den Ansprüchen 1 - 4
**dadurch gekennzeichnet,**
**dass** unmittelbar nach Austritt aus dem Schrägwalzwerk die von der Außenoberfläche des Hohlblockrohres ausgesandte Wärmestrahlung mindestens an einem, eine volle Umdrehung umfassenden, Außenoberflächenbereich des Hohlblockrohres orts- und zeitaufgelöst am jeweils gleichen sich schraubenlinienförmig fortbewegenden Messort in zeitlichen Abständen mindestens zweifach thermografisch erfasst wird und von dem jeweils erfassten Wärmebild eine entsprechend orts- und zeitaufgelöste Temperatur abgeleitet und diese durch Anwendung bekannter physikalischer Beziehungen in eine Ist-Wanddickenverteilung über Umfang und Länge des Hohlblockrohres umgewandelt und mit der Wanddicke am gleichen Messort des entsprechenden Referenzkörpers oder einer entsprechenden globalen Soll-Vorgabe verglichen wird.

6. Verfahren nach den Ansprüchen 1 - 4
**dadurch gekennzeichnet,**
**dass** aus einer Vielzahl an den an Referenzkörpern gleicher Stahlgüteklasse und Nennabmessungen ermittelten Wanddickenverteilungen ein Toleranzbereich für Wanddickenabweichungen festgelegt wird, bei dessen Überschreitung durch die ermittelten Wanddickenabweichungen des im Walzvorgang befindlichen Hohlblockes ein Signal ausgelöst wird.

7. Verfahren nach Anspruch 6
**dadurch gekennzeichnet,**
**dass** durch die Zuordnung des Signals zum Messort am Hohlblockrohr ein Bezug zu einem zur Toleranzgrenzenüberschreitung führenden Ereignis im Fertigungsprozess hergestellt wird.

8. Verfahren nach Anspruch 7
**dadurch gekennzeichnet,**
**dass** die jeweils für das gefertigte Hohlblockrohr ermittelte Zuordnung von Signal und Ereignis in einer Datenbank für jeden Referenzkörper gleicher Stahlgüteklasse und Nennabmessung hinterlegt und bei Überschreiten der Toleranzgrenzen für die Wanddickenabweichung an einem bestimmten Messort, das zur Toleranzgrenzenüberschreitung führende Ereignis angezeigt und als Steuergröße für den Fertigungsprozess verwendet wird.

9. Vorrichtung zur Durchführung des Verfahrens nach Anspruch 1
**dadurch gekennzeichnet,**
**dass** zur Erfassung und Auswertung der von der Oberfläche des Hohlblockrohres (4) ausgesandten Wärmestrahlung eine auf die Oberfläche des Hohlblockrohres (4) ortsfest gerichtete, aus einer Thermokamera (1) und einer Optik (2) bestehende, Wärmebildkamera (3) und eine damit verbundene, eine Datenbank beinhaltende, Auswerteeinheit verwendet werden.

## Claims

1. A method for monitoring the manufacturing process for the production of hot-manufactured tubes, in particular hollow-ingot tubes (4) made of steel, in which a hollow-ingot tube (4) is produced from a heated ingot by means of a cross-rolling mill using an internal tool consisting of a piercing mandrel and a mandrel rod, wherein once the ingot has been gripped by the cross-rolling mill it or the hollow-ingot tube (4) is transported helically through the cross-rolling mill or over the fixed internal tool respectively, wherein
immediately after emerging from the cross-rolling mill the heat radiation emitted from the outer surface of the hollow-ingot tube (4) is detected in space-resolved manner and is used in comparison with reference values to assess the process condition,
**characterised in that**
the heat radiation of at least one defined section of the outer surface of the hollow-ingot tube (4) is additionally detected completely thermographically in time-resolved manner and the detected heat image is compared with the reference image of an already-manufactured hollow-ingot tube of the same steel quality class and the same rated dimension of the same measuring location in each case, with any deviation in the heat image significantly occurring at a given measuring location on the hollow-ingot tube (4) compared with the heat image of the same measuring location on the reference body being used to assess the process condition.

2. A method according to Claim 1, **characterised in that** the heat radiation is detected and evaluated thermographically in space-resolved and time-resolved clocked manner along a helically extending surface line of the hollow-ingot tube.

3. A method according to Claims 1 and 2, **characterised in that** for space and time resolution the detected heat image is represented in individually evaluable pixels.

4. A method according to Claims 1 to 3, **characterised in that** additionally wall thickness deviations on the hollow-ingot tube are determined from the detected heat image, with temperatures being derived from the heat image, taking into account the actual emission conditions, and being compared with the temperatures of the respective same measuring location determined from the reference image of an already-manufactured hollow-ingot tube of the same steel quality class, same rated dimension and with known wall thickness distribution over periphery and length, with any deviation in the determined temperature occurring at a given measuring location on the hollow-ingot tube compared with the reference temperature of the same measuring location on the reference body being associated with a corresponding change in the wall thickness for the measuring location and being used for assessing the process stability.

5. A method according to Claims 1 to 4, **characterised in that** immediately after emerging from the cross-rolling mill the heat radiation emitted by the outer surface of the hollow-ingot tube is detected at least twice thermographically at time intervals at least on one outer surface region, comprising a full revolution, of the hollow-ingot tube in space- and time-resolved manner on the respective same measuring location which moves forward helically and a corresponding space- and time-resolved temperature is derived from the heat image detected in each case and this is converted by application of known physical relationships into an actual wall thickness distribution over the periphery and length of the hollow-ingot tube and is compared with the wall thickness at the same measuring location of the corresponding reference body or a corresponding overall desired default.

6. A method according to Claims 1 to 4, **characterised in that** a tolerance range for wall thickness deviations is established from a plurality of wall thickness distributions determined [on the] on reference bodies of the same steel quality class and rated dimensions, upon the exceeding of which range by the determined wall thickness deviations of the hollow ingot which is being rolled a signal is triggered.

7. A method according to Claim 6, **characterised in that** a reference to an event in the manufacturing process which leads to the tolerance limits being exceeded is produced by associating the signal with the measuring location on the hollow-ingot tube.

8. A method according to Claim 7, **characterised in that** the association of signal and event determined in each case for the hollow-ingot tube manufactured is filed in a database for each reference body of the same steel quality class and rated dimension and if the tolerance limits for the wall thickness deviation at a given measuring location are exceeded, the event which leads to the tolerance limits being exceeded is indicated and is used as a controlling variable for the manufacturing process.

9. A device for performing the method according to Claim 1, **characterised in that** a thermal imaging camera (3) which is directed in stationary manner at the surface of the hollow-ingot tube (4) and which consists of a thermal camera (1) and a lens system (2) and an evaluation unit connected thereto which contains a database are used for detecting and evaluating the heat radiation emitted from the surface of the hollow-ingot tube (4).

## Revendications

1. Procédé destiné à surveiller le procédé de fabrication pour la production de tubes fabriqués à chaud, notamment de tubes en lingot creux (4) en acier, lequel procédé consiste à fabriquer un tube en lingot creux (4) à partir d'un lingot chaud au moyen d'un laminoir à cylindres obliques en utilisant un outil intérieur composé d'un mandrin et d'une tige à mandrin, le lingot ou le tube en lingot creux (4) étant transporté en hélice à travers le laminoir à cylindres obliques ou sur l'outil intérieur fixe après que le lingot a été saisi par le laminoir à cylindres obliques, le rayonnement thermique émis par la surface extérieure du tube en lingot creux (4) étant détecté en dispersion spatiale immédiatement après la sortie du laminoir à cylindres obliques et étant utilisé en comparaison avec des valeurs de référence pour une évaluation de l'état du procédé,
**caractérisé en ce que** le rayonnement thermique d'au moins un segment défini de la surface extérieure du tube en lingot creux (4) est en plus détecté en dispersion temporelle entièrement par thermographie et **en ce que** l'image thermique obtenue est comparée à l'image de référence d'un tube en lingot creux déjà fabriqué de même classe de nuance d'acier et de même dimension nominale au même lieu de mesure, tout écart significatif de l'image thermique survenant à un lieu de mesure donné sur le tube en lingot creux (4) par rapport à l'image thermique du même lieu de mesure sur le corps de référence étant utilisé afin d'évaluer l'état du procédé.

2. Procédé selon la revendication 1,
**caractérisé en ce que** le rayonnement thermique le long d'une ligne d'enveloppe s'étendant en hélice sur le tube en lingot creux est détecté périodiquement par thermographie en dispersion spatiale et temporelle et est analysé.

3. Procédé selon l'une des revendications 1 ou 2,
**caractérisé en ce que** pour la dispersion spatiale et temporelle l'image thermique obtenue est représentée par des pixels pouvant être analysés individuellement.

4. Procédé selon les revendications 1 à 3,
**caractérisé en ce que,** à partir de l'image thermique obtenue, on détermine en outre des écarts d'épaisseur de paroi sur le tube en lingot creux, des températures étant déduites de l'image thermique en considérant les rapports d'émission effectifs et étant comparées aux températures du même lieu de mesure déterminées à partir de l'image de référence d'un tube en lingot creux déjà fabriqué de même classe de nuance d'acier, de même dimension nominale et avec répartition d'épaisseur de paroi connue sur le pourtour et la longueur, tout écart de la température déterminée par rapport à la température de référence du même lieu de mesure sur le corps de référence survenant sur un lieu de mesure donné sur le tube en lingot creux étant associé à une variation correspondante de l'épaisseur de paroi pour le lieu de mesure et étant utilisé pour une évaluation de la stabilité du procédé.

5. Procédé selon les revendications 1 à 4,
**caractérisé en ce que,** immédiatement après la sortie du laminoir à cylindres obliques, le rayonnement thermique émis par la surface extérieure du tube en lingot creux est détecté par thermographie en dispersion temporelle et spatiale sur le même lieu de mesure avançant en hélice au moins deux fois à intervalles de temps au moins sur une zone de surface extérieure du tube en lingot creux englobant un tour complet et **en ce que**, en conséquence, une température en dispersion temporelle et spatiale est déduite de l'image thermique détectée et est transformée en une répartition d'épaisseur de paroi réelle sur le pourtour et la longueur du tube en lingot creux par l'application de relations physiques connues et est comparée à l'épaisseur de paroi sur le même lieu de mesure du corps de référence correspondant ou à une valeur théorique globale prédéterminée correspondante.

6. Procédé selon les revendications 1 à 4,
**caractérisé en ce que,** à partir d'une pluralité de répartitions d'épaisseur de paroi obtenues sur des corps de référence de même classe de nuance d'acier et de mêmes dimensions nominales, on détermine une plage de tolérance pour les écarts d'épaisseur de paroi, dont le dépassement par les écarts d'épaisseur de paroi obtenus du lingot creux situé dans le procédé de laminage déclenche un signal.

7. Procédé selon la revendication 6,
**caractérisé en ce que** l'association du signal au lieu de mesure sur le tube en lingot creux crée une relation à un événement provoquant le dépassement des limites de tolérance dans le procédé de fabrication.

8. Procédé selon la revendication 7,
**caractérisé en ce que** l'association d'un signal à un événement déterminée pour le tube en lingot creux fabriqué est mémorisée dans une banque de données pour chaque corps de référence de même classe de nuance d'acier et de même dimension nominale et, en cas de dépassement des limites de tolérance pour l'écart d'épaisseur de paroi à un lieu de mesure donné, l'événement provoquant le dépassement des limites de tolérance est affiché et utilisé comme grandeur de commande pour le procédé de fabrication.

9. Dispositif destiné à la mise en oeuvre du procédé selon la revendication 1,
**caractérisé en ce que,** pour la détection et l'analyse du rayonnement thermique émis par la surface du tube en lingot creux (4), on utilise une caméra à image thermique (3) orientée de manière fixe sur la surface du tube en lingot creux (4) et composée d'une caméra thermique (1) et d'une optique (2) ainsi qu'une unité d'analyse reliée à celle-ci et comportant une banque de données.
